(19) Europäisches Patentamt
European Patent Office
Office européen des brevets

(11) **EP 4 150 363 B1**

(12) **FASCICULE DE BREVET EUROPEEN**

(45) Date de publication et mention de la délivrance du brevet:
**30.07.2025 Bulletin 2025/31**

(21) Numéro de dépôt: **21722254.6**

(22) Date de dépôt: **04.05.2021**

(51) Classification Internationale des Brevets (IPC):
**G01S 5/02** *(2010.01)*      **G01S 7/02** *(2006.01)*
**G01S 7/24** *(2006.01)*      **G01S 7/12** *(2006.01)*

(52) Classification Coopérative des Brevets (CPC):
**G01S 5/02695; G01S 5/0278; G01S 7/021; G01S 7/12; G01S 7/24**

(86) Numéro de dépôt international:
**PCT/EP2021/061664**

(87) Numéro de publication internationale:
**WO 2021/228619 (18.11.2021 Gazette 2021/46)**

(54) **METHODE ET SYSTEME DE GENERATION D'UNE CARTE DE PROBABILITE, POUR UN PORTEUR, D'ETRE DETECTE PAR UN SYSTEME DE DETECTION**

**VERFAHREN UND SYSTEM ZUR ERZEUGUNG EINER WAHRSCHEINLICHKEITSKARTE, FÜR EINEN TRÄGER, DER VON EINEM DETEKTIONSSYSTEM ERKANNT WIRD**

**METHOD AND SYSTEM FOR GENERATING A PROBABILITY MAP, FOR A CARRIER, OF BEING DETECTED BY A DETECTION SYSTEM**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.05.2020 FR 2004736**

(43) Date de publication de la demande:
**22.03.2023 Bulletin 2023/12**

(73) Titulaire: **THALES**
**92190 Meudon (FR)**

(72) Inventeurs:
- **SEUTE, Hugo**
  **78852 ELANCOURT CEDEX (FR)**
- **LACROIX, Marguerite**
  **78852 ELANCOURT CEDEX (FR)**
- **BREUIL, Nicolas**
  **78852 ELANCOURT CEDEX (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**US-A1- 2005 267 652      US-A1- 2011 029 234**
**US-B2- 9 013 500**

- **VIAN J L ET AL: "Intelligent flight management in threat environments", 19880523; 19880523 - 19880527, 23 May 1988 (1988-05-23), pages 224 - 228, XP010076895**

**Description**

L'invention concerne le domaine de l'analyse des systèmes de détection adverse, tels que des émetteurs/récepteurs d'ondes électromagnétiques, par exemple des dispositifs de communication ou des dispositifs radars.

L'invention porte plus précisément sur une méthode permettant de déterminer, pour un porteur allié, la probabilité d'être détecté par un système de détection adverse dans une zone donnée. Le porteur est, par exemple, un aéronef. Ainsi, l'invention offre une aide à la décision pour le pilote de l'aéronef pour déterminer les zones de déplacement dans lesquelles il n'est pas susceptible d'être détecté.

Dans le cas où les systèmes de détection adverses ont une position fixe, il est possible de les localiser, par exemple en utilisant des moyens de localisation par satellite ou autres moyens, une fois pour toute avant le départ de l'aéronef.

Lorsque ces systèmes sont mobiles, cela est plus difficile car leurs positions peuvent évoluer entre le moment de la localisation et la mission de l'aéronef.

Par ailleurs, les émetteurs à localiser peuvent être embarqués sur des véhicules de natures diverses et notamment qui peuvent avoir des envergures variables. Par exemple, les véhicules de grande envergure sont généralement faiblement mobiles tandis que les véhicules de moyenne envergure peuvent être plus mobiles.

Lors d'une mission de surveillance, la position des systèmes de détection à localiser de moyenne envergure n'est pas connue avec certitude ce qui contribue à augmenter le niveau de risques de la mission ou à interdire de survol de larges zones considérées comme à haut niveau de risques car avec une forte probabilité de présence de ce type de systèmes de détection.

Les zones de risques sont généralement définies par rapport aux portées des systèmes de détection.

Le problème technique général visé par l'invention consiste, pour un porteur allié, à estimer des zones géographiques dans lesquelles la probabilité est importante qu'il soit détecté par un équipement adverse ayant des capacités de détection.

Les solutions de l'art antérieur sont le plus souvent basées sur la définition de zones de risque de détection a priori, en fonction des positions supposées des systèmes de détection. Les positions peuvent être estimées à partir de capteurs de localisation ou par des informations a priori. La probabilité de détection est généralement définie de façon binaire, ayant pour valeur 0 sauf dans un disque centré sur la position supposée du système de détection.

Le document US2011/0029234A1 "threat analysis toolkit" divulgue un système permettant de modifier les points de navigation de l'itinéraire d'un aéronef en fonction des menaces identifiées provenant de radar sol ayant une position fixe ou de radar aéroporté ayant une position mobile mais connue.

Cependant, ces solutions ne prennent pas en compte les imprécisions de localisation des systèmes de détection qui peuvent conduire à définir des zones de risque erronées. Elles ne prennent pas non plus en compte les phénomènes de masquage des signaux par le relief du terrain.

L'invention propose une méthode pour générer une carte de probabilité de zones de risques, c'est-à-dire des zones dans lesquelles un porteur peut être détecté par un système de détection avec une certaine probabilité.

L'invention permet d'améliorer le réalisme de ces zones en prenant en compte les imprécisions de localisation des systèmes de détection mais aussi l'impact du relief sur leur capacité de détection.

L'invention a pour objet une méthode, mise en œuvre par ordinateur, de génération d'une carte de probabilité, pour un porteur, d'être détecté par au moins un système de détection ayant une portée maximale de détection prédéfinie $\rho$, la méthode comprenant les étapes de :

- Déterminer une probabilité de présence d'au moins un système de détection en fonction de sa position,
- Pour chaque point M d'une zone géographique donnée, intégrer la probabilité de présence sur un disque de centre M et de rayon égal à la portée maximale $\rho$.
- Générer, en chaque point M, une probabilité d'être détecté par au moins un système de détection égale au résultat de l'intégration précédente.

Dans une variante de réalisation, l'invention comprend en outre les étapes de, pour chaque système de détection :

- Calculer une information représentative de l'intervisibilité entre le porteur et le système de détection, en tenant compte du relief du terrain,

- Pondérer la probabilité de présence du système de détection par l'information représentative de l'intervisibilité.

Selon un aspect particulier de l'invention, l'information représentative de l'intervisibilité est égale à 1 si le porteur et le système de détection sont intervisibles au vu du relief et est égale à 0 sinon.

Selon un aspect particulier de l'invention, l'information représentative de l'intervisibilité est déterminée à partir d'un modèle numérique du terrain en vérifiant si la droite reliant le porteur et le système de détection présente ou non une intersection avec le modèle numérique du terrain.

Dans une variante de réalisation, l'invention comprend en outre une étape de générer, en chaque point M, une probabilité d'être détecté par plusieurs systèmes de détection, égale à l'union des probabilités d'être détecté par chaque système de détection.

Selon un aspect particulier de l'invention, la probabilité de présence d'au moins un système de détection est déterminée au moyen d'un capteur de localisation.

Selon un aspect particulier de l'invention, le capteur de localisation est un radar, un capteur passif de localisation par triangulation ou un capteur optronique.

Dans une variante de réalisation, l'invention comprend en outre une étape d'affichage de la carte sur une interface de visualisation.

L'invention a aussi pour objet un système de génération d'une carte de probabilité, pour un porteur, d'être détecté par au moins un système de détection ayant une portée maximale de détection prédéfinie $\rho$, le système étant configuré pour exécuter les étapes de la méthode selon l'invention.

D'autres caractéristiques et avantages de la présente invention apparaîtront mieux à la lecture de la description qui suit en relation aux dessins annexés suivants.

[Fig. 1] la figure 1 représente un organigramme détaillant les étapes de mise en œuvre de la méthode selon l'invention,

[Fig. 2] la figure 2 représente, sur un schéma, le principe de calcul de la probabilité de risque de détection selon l'invention,

[Fig. 3] la figure 3 représente une illustration de la prise en compte du masquage d'un signal par le relief,

[Fig. 4] la figure 4 représente deux exemples de cartes de probabilité de présence d'un système de détection,

[Fig. 5] la figure 5 représente un exemple de modèle numérique de terrain,

[Fig. 6] la figure 6 représente un exemple de cartes de zones de risques d'être détecté par un système de détection,

[Fig. 7] la figure 7 représente un exemple de carte de zones de risques d'être détecté par des systèmes de détection,

[Fig. 8] la figure 8 représente un schéma d'un système de génération de carte de zones de risques selon l'invention.

L'invention a pour objectif de déterminer une cartographie de zones de risques de détection, en chaque point, par un système de détection. Le terme système de détection désigne un équipement comprenant au moins un émetteur/récepteur d'ondes électromagnétiques ayant des capacités de détection d'ondes émises par un autre émetteur. Il s'agit, par exemple, d'un système radar.

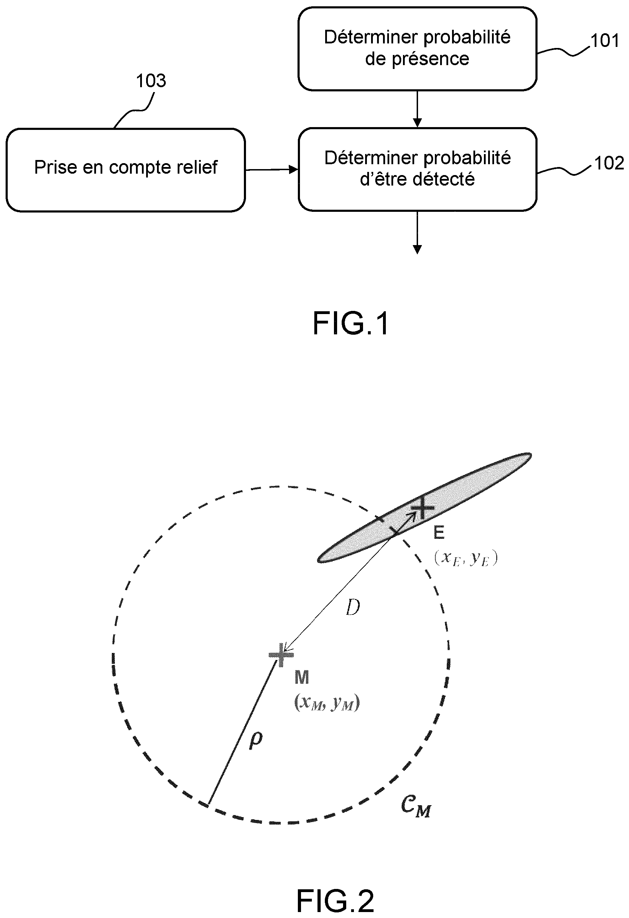

Les étapes principales de mise en œuvre de la méthode selon l'invention sont schématisées à la figure 1.

La première étape consiste à déterminer une probabilité de présence d'un système de détection. On se place tout d'abord dans la situation d'une détection potentielle par un système constitué d'un seul équipement de détection. Le système de détection est un équipement comprenant des moyens d'émission/réception d'ondes électromagnétiques et/ou une capacité à détecter une émission d'ondes électromagnétiques par un autre émetteur.

Ainsi, la situation visée correspond à une plateforme alliée située en un point M pour lequel on cherche à évaluer la probabilité d'être détecté par un système de détection situé en un point E. Cet exemple est schématisé à la figure 2.

Pour un point M de la carte, de coordonnées $(x,y)$, on souhaite déterminer la probabilité de détection par le système E de coordonnées $(x_E, y_E)$. On considère que la portée de détection du système E est connue et égale à $\rho$ et que sa probabilité de présence en un point $(x,y)$ de la carte est donnée par $f_E(x, y)$.

La probabilité $f_E(x, y)$ peut être déterminée au préalable par un équipement de détection comprenant un capteur de localisation, par exemple un radar d'imagerie SAR, un capteur de localisation passive par triangulation, ou un capteur optronique par exemple un capteur d'imagerie optique visible ou optique infrarouge.

Si le capteur fournit une localisation sous la forme d'une ellipse d'incertitude, il existe une expression littérale définissant $f_E$. Généralement, les ellipses d'incertitudes sont définies par leur centre (position estimée) $\mu_E$ et leur matrice de covariance $\Sigma_E$. La densité $f_E$ est alors donnée par la distribution binormale :

$$f_E(X) = \frac{1}{2\pi|\Sigma_E|^{1/2}} \exp\left[-\frac{1}{2}(X - \mu_E)^T \Sigma_E^{-1}(X - \mu_E)\right]$$

Avec $X = [x,y]^T$.

Sans sortir du cadre de l'invention, la probabilité de localisation $f_E$ peut être obtenue en fusionnant diverses sources d'information incluant notamment des informations de localisation prenant en compte la sémantique du terrain, le relief ou des informations a priori sur les systèmes à localiser.

Dans une deuxième étape 102, on détermine ensuite une probabilité qu'une plateforme alliée situé au point M soit détectée par un système de détection situé au point E.

Cette probabilité est donnée par la relation suivante :

$$P(D \leq \rho) = \int_0^\rho f_D(r)\, dr$$

D est la distance entre M et E et $f_D(r)$ est la densité de probabilité de présence du système E en fonction de la distance D.

Au final, on montre que :

$$\boxed{P(D \leq \rho) = \iint_{\mathcal{C}_M} f_E(x,y)\, dx\, dy}$$

Où $\mathcal{C}_M$ est le disque de centre $M$ et de rayon $\rho$.

On obtient une carte de zones de risques en calculant la probabilité ci-dessus pour un ensemble de points du plan, par exemple sur une grille ayant un pas donné pour une zone géographique prédéterminée.

Dans une étape 203 optionnelle, on prend en compte les cas où des masquages liés au relief peuvent réduire la portée du système de détection adverse E dans certaines zones. Pour cela, on s'intéresse à l'intervisibilité entre le système de détection E et la plateforme alliée M. Il y a intervisibilité lorsqu'on peut tracer un segment de droite entre les deux points E et M sans intercepter le terrain.

On suppose que l'on dispose d'un modèle numérique de terrain permettant de réaliser une fonction donnant l'altitude du terrain en un point de coordonnées (x,y). On note cette fonction $z_{MNT}(x, y)$.

La condition d'intervisibilité entre le système de détection E de coordonnées $(x_E, y_E, z_E)$ et une plateforme située en un point M de coordonnées $(x_M, y_M, z_M)$ peut s'exprimer comme la condition suivante : les points E et M sont intervisibles si la relation suivante est respectée.

$z_{MNT}(x_E + k(x_M - x_E), y_E + k(y_M - y_E)) < z_E + k(z_M - z_E)$ , pour toutes valeurs de k réelles comprises entre 0 et 1.

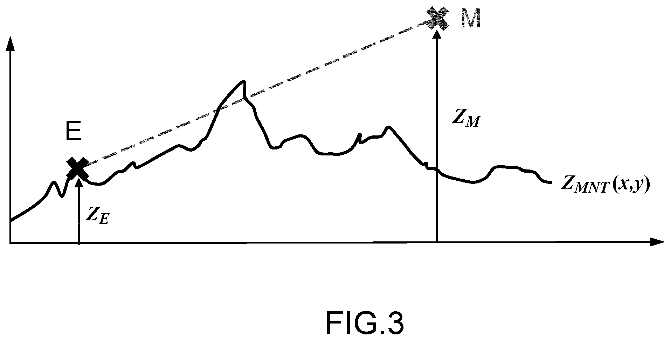

La figure 3 représente un exemple de modèle numérique de terrain et illustre une situation où les points E et M ne sont pas intervisibles car la droite qui les relient intercepte le relief.

On détermine une fonction indicatrice de l'intervisibilité entre les points E et M.

On note $1_M(x_E, y_E)$ cette fonction.

Par exemple, cette fonction vaut 1 si les points E et M sont intervisibles et 0 sinon.

La probabilité de détection prenant en compte l'intervisibilité peut alors se calculer de la façon suivante :

$$\boxed{P(D \leq \rho) = \iint_{\mathcal{C}_M} \mathbf{1}_M(x,y)\, f_E(x,y)\, dx\, dy}$$

Cette expression dépend des coordonnées de la plateforme $M$. En calculant $P(D \leq \rho)$ en faisant varier $(x_M, y_M)$ avec $z_M$ constant, on obtient une carte du risque de détection à l'altitude $z_M$. Il est possible de calculer différentes cartes de probabilité de détection à différentes altitudes si nécessaire.

Si le système de détection global est composé de N sous-systèmes de détection en réseau $E_1, \dots E_N$, chacun ayant des capacités de détection dans un rayon de détection (portée) respectif $\rho_1, \dots, \rho_N$, alors la probabilité d'être détecté par au moins l'un de ces sous-systèmes est égale à l'union des probabilités d'être détecté par chaque sous-système. Elle est donnée par la relation suivante :

$$P(D_1 \leq \rho_1 \cup D_2 \leq \rho_2 \cup ... \cup D_N \leq \rho_N) = 1 - \prod_{n=1}^{N}[1 - P(D_n < \rho_n)]$$

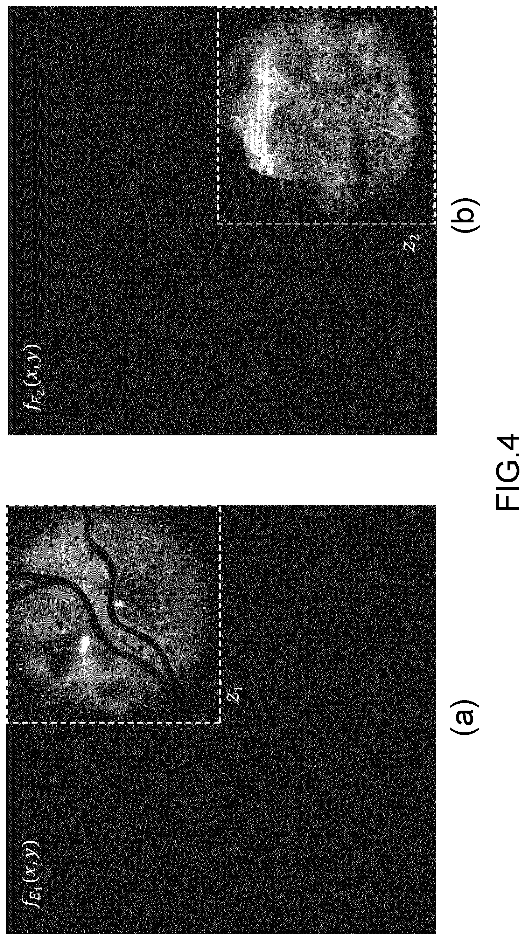

Les figures 4,5,6 et 7 illustrent un exemple d'application de l'invention. Dans cet exemple, on considère une zone d'intérêt où deux systèmes de détection $E_1$ et $E_2$ de portée $\rho_1$ et $\rho_2$ sont présents. Un système de géolocalisation a permis au préalable de déterminer une estimation grossière de la position de ces systèmes de détection. Cette information sur la position est définie par les cartes de densité de probabilité de présence $f_{E_1}$ et $f_{E_2}$ représentées à la figure 4. Les systèmes de détection $E_1$ et $E_2$ se situent respectivement à l'intérieur de la zone $\mathcal{Z}_1$ et $\mathcal{Z}_2$.

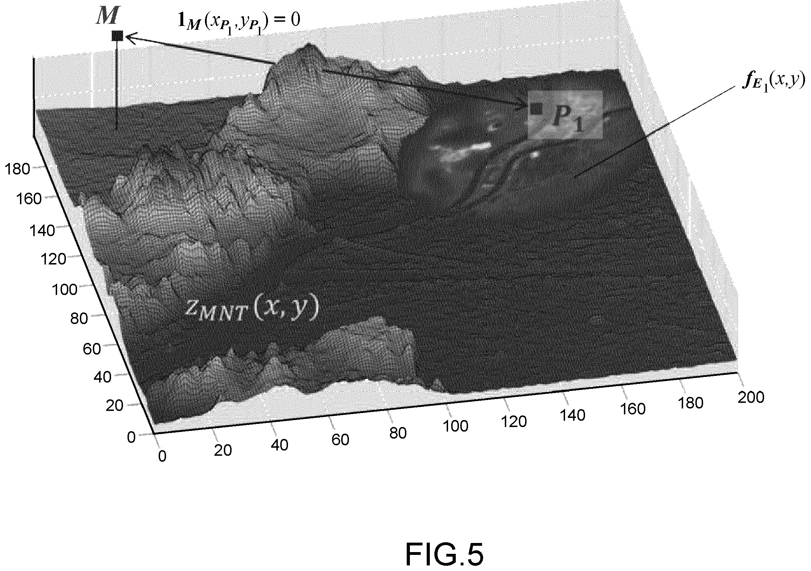

On dispose par ailleurs d'un modèle numérique de terrain $z_{MNT}(x, y)$ sur la zone d'intérêt. Ce modèle est représenté à la figure 5.

A partir des densités $f_{E_1}$ et $f_{E_2}$, des portées $\rho_1$, $\rho_2$ ainsi que du modèle numérique de terrain $z_{MNT}$, en utilisant la méthode selon l'invention, on peut calculer $P(D_1 \leq \rho_1)$ et $P(D_2 \leq \rho_2)$ les probabilités de détection individuelles pour les systèmes de détection $E_1$ et $E_2$.

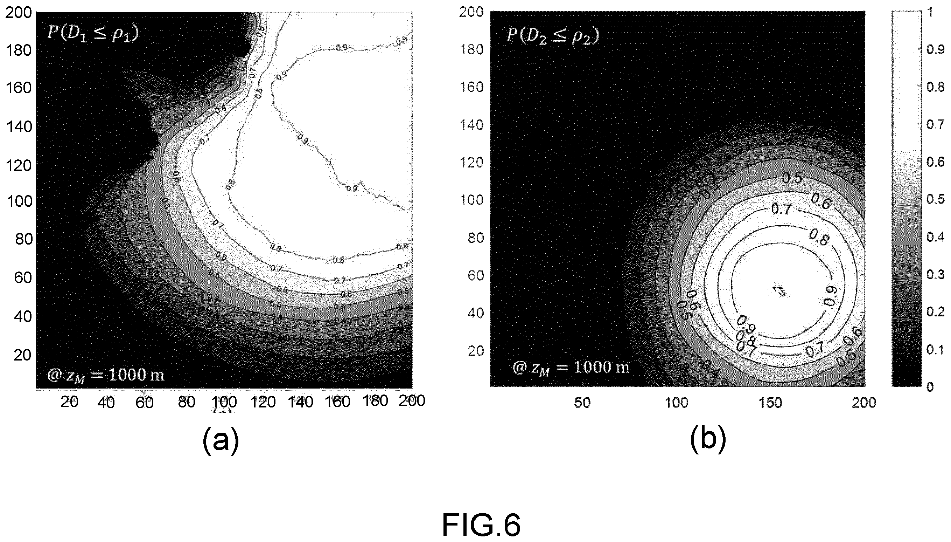

Ces probabilités sont représentées sous forme de cartes de risques de détection à la figure 6.

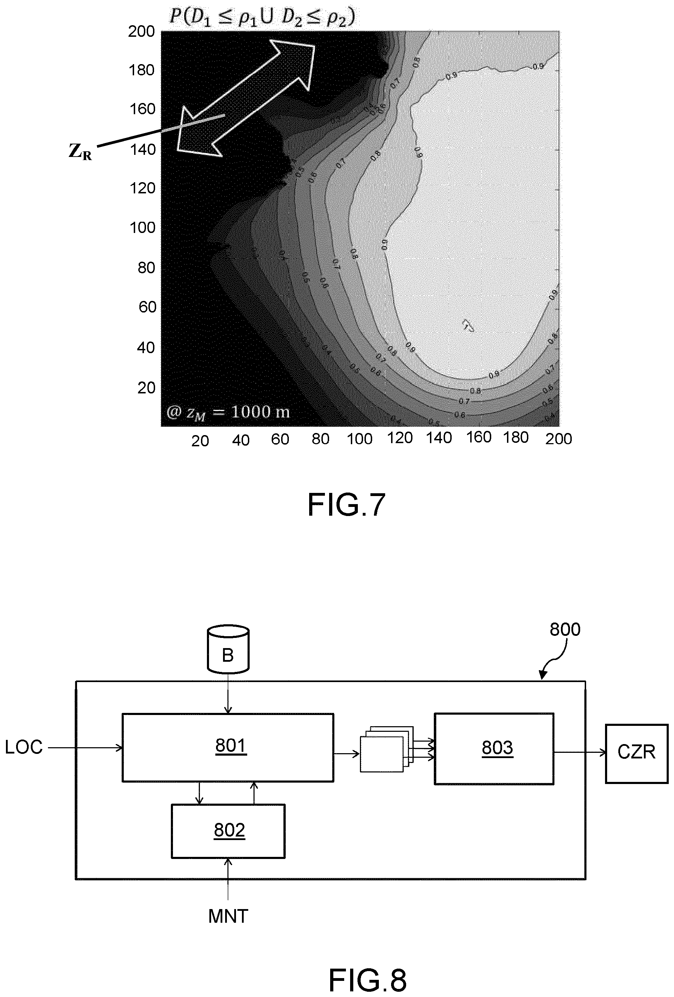

La carte de risque global associé au système composé des deux systèmes de détection est ensuite obtenue en calculant l'union des probabilités pour chacun des systèmes de détection comme explicité ci-dessus. Le résultat final est représenté à la figure 7.

La carte représentée à la figure 7 permet de faire ressortir les zones où le risque d'être détecté par le système global est très faible (en noir). Par exemple, sur la figure 7, la zone $Z_R$ identifiée à la figure 7 est une zone de masquage par le relief qui permet à une plateforme de ne pas être détectée.

La figure 8 représente un schéma fonctionnel d'un exemple de système 800 configuré pour mettre en œuvre l'invention.

Le système 800 comprend un module 801 de calcul de probabilité de présence d'un système de détection qui reçoit en entrée des données issues d'un ou plusieurs capteurs de localisation LOC et des données issues d'une base de connaissance B notamment donnant une information sur la portée des systèmes de détection. Un module 802 de calcul d'intervisibilité interagit avec le module 801 de calcul de probabilité en exploitant un modèle numérique de terrain MNT. Le module 801 réalise un calcul de probabilité pour chaque sous-système de détection d'un système global de détection, puis fournit les résultats à un module de fusion 803 qui calcule la probabilité finale sous forme de carte de zones de risques CZR.

Chacun des éléments du système 800 selon l'invention peut être réalisé sous forme logicielle et/ou matérielle à partir d'un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

L'invention peut aussi être mise en œuvre en tant que programme d'ordinateur comportant des instructions pour son exécution. Le programme d'ordinateur peut être enregistré sur un support d'enregistrement lisible par un processeur. La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en œuvre des aspects des techniques décrites ici. Les moyens ou ressources informatiques peuvent notamment être distribués ("*Cloud computing*"), éventuellement selon des technologies de pair-à-pair. Le code logiciel peut être exécuté sur n'importe quel processeur approprié (par exemple, un microprocesseur) ou cœur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en œuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités. Le code exécutable peut également être téléchargeable depuis un serveur distant.

Le programme d'ordinateur peut comprendre un code source, un code objet, un code source intermédiaire ou un code objet partiellement compilé ou toute autre forme d'instructions de code de programme adaptées pour mettre en œuvre l'invention sous la forme d'un programme d'ordinateur.

Un tel programme peut présenter diverses architectures fonctionnelles. Par exemple, un programme d'ordinateur selon l'invention peut être décomposé en une ou plusieurs routines qui peuvent être adaptées à exécuter une ou plusieurs fonctions de l'invention telles que décrites précédemment. Les routines peuvent être enregistrées ensemble dans un même fichier exécutable mais peuvent également être sauvegardées dans un ou plusieurs fichiers externes sous la forme de librairies qui sont associées à un programme principal de façon statique ou dynamique. Les routines peuvent être appelées depuis le programme principal mais peuvent également comprendre des appels à d'autres routines ou sous-routines.

Tous les procédés ou étapes de procédés, programmes ou sous-programmes décrits sous la forme d'organigrammes doivent être interprétés comme correspondant à des modules, segments ou portions de code de programme qui incluent une ou plusieurs instructions de code pour implémenter les fonctions logiques et les étapes de l'invention décrites.

La carte de probabilité finale CZR peut être restituée à un utilisateur via une interface graphique, par exemple un écran d'affichage ou tout autre moyen équivalent.

Le système 800 peut être embarqué à bord d'un porteur mobile, par exemple un aéronef.

## Revendications

1. Méthode, mise en œuvre par ordinateur, de génération d'une carte de probabilité, pour un porteur, d'être détecté par au moins un système de détection ayant une portée maximale de détection prédéfinie $\rho$, la méthode comprenant les étapes de :

   - Déterminer (101) une probabilité de présence d'au moins un système de détection en fonction de sa position,
   - Pour chaque point M d'une zone géographique donnée correspondant à une position du porteur, intégrer la probabilité de présence sur un disque de centre M et de rayon égal à la portée maximale $\rho$.
   - Générer (102), en chaque point M, une probabilité d'être détecté par au moins un système de détection égale au résultat de l'intégration précédente.

2. Méthode de génération d'une carte de probabilité d'être détecté selon la revendication 1 comprenant en outre les étapes de, pour chaque système de détection :

   - Calculer (103) une information représentative de l'intervisibilité entre le porteur et le système de détection, en tenant compte du relief du terrain,
   - Pondérer la probabilité de présence du système de détection par l'information représentative de l'intervisibilité.

3. Méthode de génération d'une carte de probabilité d'être détecté selon la revendication 2 dans laquelle l'information représentative de l'intervisibilité est égale à 1 si le porteur et le système de détection sont intervisibles au vu du relief et est égale à 0 sinon.

4. Méthode de génération d'une carte de probabilité d'être détecté selon l'une quelconque des revendications 2 ou 3 dans laquelle l'information représentative de l'intervisibilité est déterminée à partir d'un modèle numérique du terrain en vérifiant si la droite reliant le porteur et le système de détection présente ou non une intersection avec le modèle numérique du terrain.

5. Méthode de génération d'une carte de probabilité d'être détecté selon l'une des revendications précédentes comprenant en outre une étape de générer, en chaque point M, une probabilité d'être détecté par plusieurs systèmes de détection, égale à l'union des probabilités d'être détecté par chaque système de détection.

6. Méthode de génération d'une carte de probabilité d'être détecté selon l'une des revendications précédentes dans laquelle la probabilité de présence d'au moins un système de détection est déterminée au moyen d'un capteur de localisation.

7. Méthode de génération d'une carte de probabilité d'être détecté selon la revendication 6 dans laquelle le capteur de localisation est un radar, un capteur passif de localisation par triangulation ou un capteur optronique.

8. Méthode de génération d'une carte de probabilité d'être détecté selon l'une des revendications précédentes comprenant en outre une étape d'affichage de la carte sur une interface de visualisation.

9. Système (800) de génération d'une carte de probabilité, pour un porteur, d'être détecté par au moins un système de détection ayant une portée maximale de détection prédéfinie $\rho$, le système étant configuré pour exécuter les étapes de la méthode selon l'une quelconque des revendications précédentes.

**Patentansprüche**

1. Computerimplementiertes Verfahren zum Erzeugen einer Karte für die Wahrscheinlichkeit, dass ein Träger von mindestens einem Detektionssystem erkannt wird, das eine vordefinierte maximale Detektionsreichweite $\rho$ aufweist, wobei das Verfahren die folgenden Schritte umfasst:

   - Bestimmen (101) einer Wahrscheinlichkeit des Vorliegens mindestens eines Detektionssystems in Abhängigkeit von dessen Position,
   - für jeden Punkt M einer gegebenen geographischen Zone entsprechend einer Position des Trägers, Integrieren der Wahrscheinlichkeit des Vorliegens auf einer Scheibe mit einem Zentrum M und einem Radius gleich der maximalen Reichweite $\rho$,
   - Erzeugen (102), an jedem Punkt M, einer Wahrscheinlichkeit, von mindestens einem Detektionssystem erkannt zu werden, gleich dem Ergebnis der vorhergehenden Integration.

2. Verfahren zum Erzeugen einer Karte für die Wahrscheinlichkeit, erkannt zu werden, nach Anspruch 1, ferner umfassend, für jedes Detektionssystem, die folgenden Schritte:

   - Berechnen (103) von Informationen, die für die gegenseitige Sichtbarkeit zwischen dem Träger und dem Detektionssystem stehen, unter Berücksichtigung des Reliefs des Geländes,
   - Gewichten der Wahrscheinlichkeit des Vorliegens des Detektionssystems durch die für die gegenseitige Sichtbarkeit stehenden Informationen.

3. Verfahren zum Erzeugen einer Karte für die Wahrscheinlichkeit, erkannt zu werden, nach Anspruch 2, wobei die für die gegenseitige Sichtbarkeit stehenden Informationen gleich 1 sind, wenn der Träger und das Detektionssystem angesichts des Reliefs gegenseitig sichtbar sind, und andernfalls gleich 0 sind.

4. Verfahren zum Erzeugen einer Karte für die Wahrscheinlichkeit, erkannt zu werden, nach einem der Ansprüche 2 oder 3, wobei die Informationen, die für die gegenseitige Sichtbarkeit stehen, anhand eines digitalen Modells des Geländes bestimmt werden, indem überprüft wird, ob die Gerade, die den Träger und das Detektionssystem verbindet, eine Überschneidung mit dem digitalen Modell des Geländes aufweist oder nicht.

5. Verfahren zum Erzeugen einer Karte für die Wahrscheinlichkeit, erkannt zu werden, nach einem der vorhergehenden Ansprüche, ferner umfassend einen Schritt zum Erzeugen, an jedem Punkt M, einer Wahrscheinlichkeit, von mehreren Detektionssystemen erkannt zu werden, gleich der Vereinigung der Wahrscheinlichkeiten, von jedem Detektionssystem erkannt zu werden.

6. Verfahren zum Erzeugen einer Karte für die Wahrscheinlichkeit, erkannt zu werden, nach einem der vorhergehenden Ansprüche, wobei die Wahrscheinlichkeit des Vorliegens von mindestens einem Detektionssystem mittels eines Lokalisierungssensors bestimmt wird.

7. Verfahren zum Erzeugen einer Karte für die Wahrscheinlichkeit, erkannt zu werden, nach Anspruch 6, wobei es sich bei dem Lokalisierungssensor um ein Radargerät, einen passiven Lokalisierungssensor durch Triangulation oder einen optronischen Sensor handelt.

8. Verfahren zum Erzeugen einer Karte für die Wahrscheinlichkeit, erkannt zu werden, nach einem der vorhergehenden Ansprüche, ferner umfassend einen Schritt zum Anzeigen der Karte auf einer Visualisierungsschnittstelle.

9. System (800) zum Erzeugen einer Karte für die Wahrscheinlichkeit, dass ein Träger von mindestens einem Detektionssystem erkannt wird, das eine vordefinierte maximale Detektionsreichweite $\rho$ aufweist, wobei das System dafür konfiguriert ist, die Schritte des Verfahrens nach einem der vorhergehenden Ansprüche auszuführen.

**Claims**

1. A computer-implemented method for generating a map of the probability of a carrier being detected by at least one detection system with a predefined maximum detection range $\rho$, the method comprising the steps of:

   - determining (101) a probability of the presence of at least one detection system as a function of its position;

- integrating, for each point M of a given geographical area corresponding to a position of the carrier, the probability of the presence on a disk with a centre M and with a radius that is equal to the maximum range $\rho$;
- generating (102), at each point M, a probability of being detected by at least one detection system that is equal to the result of the previous integration.

2. The method for generating a map of the probability of being detected according to claim 1, further comprising, for each detection system, the steps of:

- computing (103) information representing the intervisibility between the carrier and the detection system, taking into account the relief of the terrain;
- weighting the probability of the presence of the detection system through the information representing the intervisibility.

3. The method for generating a map of the probability of being detected according to claim 2, wherein the information representing the intervisibility is equal to 1 if the carrier and the detection system are intervisible in view of the relief, and is otherwise equal to 0.

4. The method for generating a map of the probability of being detected according to any one of claims 2 or 3, wherein the information representing the intervisibility is determined based on a digital model of the terrain by checking whether the straight line connecting the carrier and the detection system has or does not have an intersection with the digital model of the terrain.

5. The method for generating a map of the probability of being detected according to any of the preceding claims, further comprising a step of generating, at each point M, a probability of being detected by several detection systems, equal to the combination of the probabilities of being detected by each detection system.

6. The method for generating a map of the probability of being detected according to any of the preceding claims, wherein the probability of the presence of at least one detection system is determined by means of a location sensor.

7. The method for generating a map of the probability of being detected according to claim 6, wherein the location sensor is a radar, a passive triangulation location sensor or an optronic sensor.

8. The method for generating a map of the probability of being detected according to any of the preceding claims, further comprising a step of displaying the map on a visualisation interface.

9. A system (800) for generating a map of the probability of a carrier being detected by at least one detection system with a predefined maximum detection range $\rho$, the system being configured to execute the steps of the method according to any one of the preceding claims.

Déterminer probabilité
de présence

101

103

Prise en compte relief

Déterminer probabilité
d'être détecté

102

# FIG.1

E

$(x_E, y_E)$

$D$

M

$(x_M, y_M)$

$\rho$

$\mathcal{C}_M$

# FIG.2

FIG.3

$f_{E_1}(x, y)$

$\mathcal{Z}_1$

$f_{E_2}(x, y)$

$\mathcal{Z}_2$

(a)

(b)

FIG.4

FIG.5

(a)

(b)

FIG.6

FIG.7

FIG.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110029234 A1